# EUROPEAN PATENT SPECIFICATION

(11) **EP 3 237 198 B1**
(45) Date of publication and mention of the grant of the patent: **21.03.2018**
(21) Application number: 15837153.4
(22) Date of filing: 09.12.2015
(51) Int. Cl.: B32B 5/02, B32B 7/08, B32B 9/02, B32B 15/04, B32B 15/08, B32B 27/20

(54) **COMPOSITE STRUCTURE**
VERBUNDSTRUKTUR
STRUCTURE COMPOSITE

(30) Priority: 25.12.2014 TR 201415748
(43) Date of publication of application: 01.11.2017
(73) Proprietor: Otokar Otomotiv ve Savunma Sanayi Anonim Sirketi, 54580 Sakarya (TR)
(72) Inventor: KAMBUROGLU, Ozgur, 54580 Sakarya (TR); BASOGLU, Mustafa, 54580 Sakarya (TR)
(74) Representative: Inal, Aysegul Seda
(86) International application number: PCT/TR2015/050238
(87) International publication number: WO 2016/105314

(56) References cited:
- GB-A- 2 159 765
- GB-A- 2 471 767
- US-A1- 2005 031 843
- US-A1- 2009 197 044
- US-A1- 2010 224 438
- US-B1- 6 749 929

## Description

### Technical Field of the Invention

The invention subject to the application is related to a lightweight and rigid composite strcuture having high fuel and oil intake resistance developed for an engine chamber cover located in areas that necessitate heat and noise insulation and particularly located in busses.

### Known State of the Art of the Invention (Prior Art)

The invention subject to the application is formed of a lightweight and rigid composite strcuture having high fuel and oil intake resistance developed for an engine chamber cover located in areas that necessitate heat and noise insulation and particularly located in busses.

The engine of busses is provided at the rear section of the related vehicle different to conventional automobiles. Therefore in vehicles whose engine is provided at the rear section the engine chamber is also provided in the rear section. In the cases that the engine chamber is located at the rear section of the vehicle, the air flow which is formed depending on the travelling direction of the vehilce when the engine chamber is being cooled does not effect the engine chamber. As a result, various other methods and precautions related thereto are used in order to cool the engine chamber.

Depending on this, various problems can be faced while the desired temperature and noise conditions are being provided. It is crucial for the engine chamber cover to have certain characteristics in terms of heat and noise insulation especially during unwanted situations that necessitate emergency intervention such as fire or during maintenance.

Additionally the precautions that need to be taken for passenger safety against flammable products such as fuel or oil and high temperature sources that are formed in the engine chamber of vehicles also makes the composite structure heavier. In connection with this, difficulties during mounting can be faced and service costs are thereby increased.

A composite structure has been developed by means of the invention that is described in further detail below, in order to eliminate the problems mentioned above and a lightweight structure which is both resistant to heat and noise and is low cost is obtained by means of the structure of the invention.
US 6749929 B1 discloses a lightweight and rigid composite structure having high fuel and oil intake resistance developed for an engine chamber cover located in areas that necessitate heat and noise insulation. It comprises; temperature insulation layer formed of foam material, a spnge layer, a main layer providing heat insulation.

### Brief desciption of the invention and its aims

The invention subject to the application is related to a lightweight and rigid composite structure which has high fuel and oil intake resistance that has been developed for an engine chamber cover, provided in areas that require heat and noise insulation and particularly in busses.

The following is provided by means of the composite strcuture formed by means of bringing together the substrates of the invention;
- A composite structure which is lightweight, rigid and resistant to external conditions is obtained.
- Noise and high temperature resistance compliant to engine chamber conditions is provided.
- A composite structure which is low cost and is visually coherent with the area that it is to be installed to is provided.

This invention has been prepared in order to be used in areas that necessitate heat and noise insulation and for objects that may need to be serviced from time to time. A new composite structure has been formed by bringing together different types of materials. The materials inside the composite strcuture not only prevent the risk of fire that may occur in a vehicle by means of the composite structure being highly resistant to fuel and oil intake, but also its lightweight and rigid structure enable serviceablility.

### Definitions of the figures describing the invention

The figures which have been prepared in order to further describe the lightweight and rigid composite structure which has high fuel and oil intake resistance that is developed to be used in areas that necessitate heat and noise insulation and particularly developed to be used for the engine chamber covers found in busses have been described below.

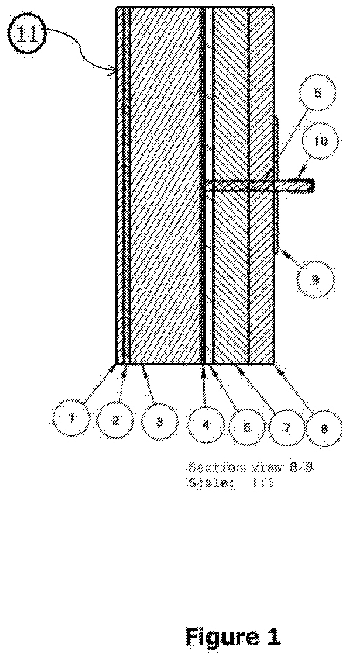

Figure 1- Section detail of the composite structure
Figure 2- Blown up view of the composite structure

### Definitions of the Aspects/ Sections/ Parts Forming the Invention

The parts/sections/aspects that can be seen in the figures prepared in order to further explain the composite structure formed according to the present invention have each been numbered and the references of each number have been listed below.
**11.** Composite structure
**1.** External layer
**2.** Plastic layer
**3.** Heat insulation layer
**4.** Metal layer
**5.** Nail
**6.** Noise insulation layer
**7.** Sponge
**8.** Fibre layer
**9.** Retaining clip
**10.** Cap (PVC)

### Detailed Description of the Invention

The invention subject to the application is related to a lightweight and rigid composite structure (11) which has high fuel and oil intake resistance that has been developed for an engine chamber cover, provided in areas that require heat and noise insulation and particularly in busses.

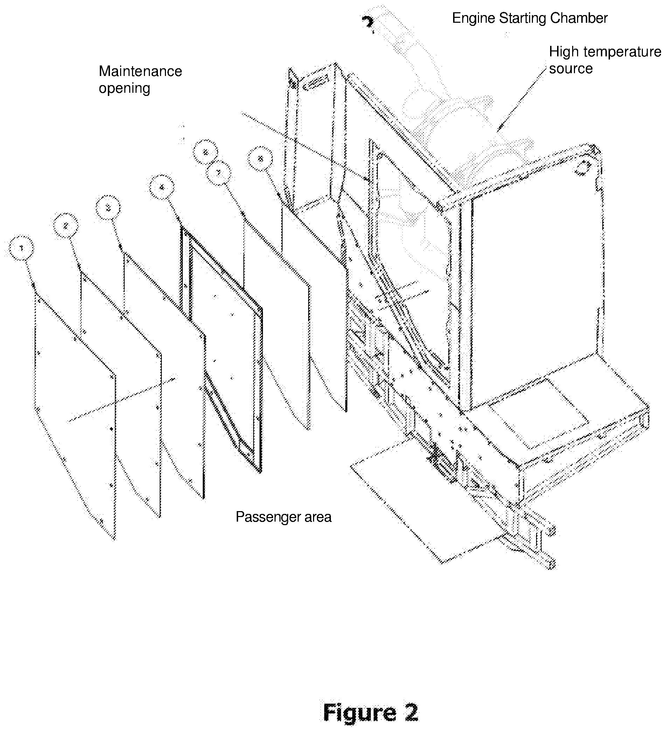

In figure 2, an illustrative blown up view relating to the composite structure (11) subject to the application is given. The composite structure (11) subject to the invention is formed of several layers produced from different materials, wherein a lightweight and rigid structure is obtained which also has high fuel and oil intake resistance, to be used for engine chamber covers usually found in busses. The invention subject to the application basically comprises an external layer (1), a plastic layer (2), a heat insulation layer (3), a metal layer (4), a noise insulation layer (6), a sponge (7) and fibre layer (8).

The composite structure (11) described according to the present invention basically comprises the below mentioned layers and connection means;
- An external layer (1) made of linoleum and used on the external surface in order to provide visual compatibility,
- A plastic layer (2) obtained from glass reinforced plastic in order to provide a smooth base onto which said linoleum (1) will be adhered to,
- A temperature insulation layer (3) formed of polystyrene foam (styrofoam) material, which ensures that the obtained composite strcuture (11) is lightweight and heat tolerant,
- A metal layer (4) which is made of a galvanized steel sheet having 1 mm thickness, which ensures that the composite structure (11) to be obtained, such that it aids to bind the used layers together, is rigid,
- A noise insulation layer (6) providing noise insulation which is made of mineral filler polymer having 2mm thickness,
- A sponge layer (7) made of melamine sponge having a thickness of 10mm, having 150° heat tolerance and 90% noise insulation at 2.000Hz frequency wherein said layer is 50mm thick,
- A main layer providing the heat insulation of the composite strcutrue (11) that is to be obtained,- wherein it comprises a glass fibre layer (8) having an aluminium surface that provides heat tolerance at +250° degrees radiation, for a long duration at 40° /+ 180°,
- A nail (5) that keeps said noise insulation layer (6), sponge layer (7) and glass fibre layer (8) together and ensures that it is fixed to the metal layer (4) made of galvanized steel material,
- A retaining clip (9) which ensures that the layers forming the composite strcuture (11) that is to be obtained are fixed by means of said nail (5), and
- A cap (10) made of PVC which enables to seal off the extending end of the nail (5) used for fixing.

The edge recesses of the layers described above, are sealed off by means of an elastic silicon gasket tolerant to temperatues between -60° C ile 200° C; and the layers are placed on the nail (5) by bringing together the layers in accordance with the sequence mentioned above. Following this, said clip (9) and cap (10) are fixed thereon.

## Claims

1. A lightweight and rigid composite strcuture (11) having high fuel and oil intake resistance developed for an engine chamber cover located in areas that necessitate heat and noise insulation and particularly located in busses, **characterized in that** it comprises;
• An external layer (1) made of linoleum and used on the external surface in order to provide visual compatibility,
• A plastic layer (2) obtained from glass reinforced plastic in order to provide a smooth base onto which said linoleum (1) will be adhered to,
• A temperature insulation layer (3) formed of polystyrene foam (styrofoam) material, which ensures that the obtained composite strcuture (11) is lightweight and heat tolerant,
• A metal layer (4) which is made of a galvanized steel sheet having 1 mm thickness, which ensures that the composite structure (11) to be obtained, such that it aids to bind the used layers together, is rigid,
• A noise insulation layer (6) providing noise insulation which is made of mineral filler polymer having 2mm thickness,
• A sponge layer (7) made of melamine sponge having a thickness of 10mm, having 150° heat tolerance and 90% noise insulation at 2.000Hz frequency wherein said layer is 50mm thick,
• A main layer providing the heat insulation of the composite strcutrue (11) that is to be obtained,- wherein it comprises a glass fibre layer (8) having an aluminium surface that provides heat tolerance at +250° degrees radiation, for a long duration at 40° /+ 180°,
• A nail (5) that keeps said noise insulation layer (6), sponge layer (7) and glass fibre layer (8) together and ensures that it is fixed to the metal layer (4) made of galvanized steel material,
• A retaining clip (9) which ensures that the layers forming the composite strcuture (11) that is to be obtained are fixed by means of said nail (5), and
• A cap (10) made of PVC which enables to seal off the extending end of the nail (5) used for fixing.

2. A composite strcuture (11) according to claim 1, **characterized in that** the edge recesses of said layers are sealed off by means of an elastic silicon gasket that is tolerant to temperatures between -60° C- 200° C.

## Patentansprüche

1. Eine für einen Motorraumdeckel, der insbesondere in Bussen und in Bereichen, die eine Wärme- und Geräuschisolierung erfordern, vorhanden ist, entwickelte und einen hohen Brennstoff- und Öleinlaßwiderstand aufweisende, leichtgewichtige und steife Verbundstruktur (11) **dadurch gekennzeichnet, dass** sie folgendes umfasst;
• eine äußere Schicht (1) aus Linoleum, die auf der äußeren Oberfläche für visuelle Kompatibilität verwendet wird,
• eine Kunststoffschicht (2) aus glasfaserverstärktem Kunststoff, um eine glatte Unterlage zu schaffen, auf die das Linoleum (1) aufgeklebt werden kann
• eine wärmeisolierende Schicht (3), die aus einem Polystyrolschaum (Styropor) gebildet ist, um sicherzustellen, dass die resultierende Verbundstruktur (11) leicht und wärmebeständig ist
• eine Metallschicht (4) hergestellt aus galvanisiertem Stahlblech mit einer Dicke von 1 mm, um sicherzustellen, dass die so erhaltene Verbundstruktur (11) unbiegsam ist, um die verwendeten Schichten miteinander zu verbinden,
• eine Schalldämmschicht (6) zur Schallisolierung, hergestellt aus einem Mineralfüllstoffpolymer mit einer Dicke von 2 mm,
• eine Schwammschicht (7) aus einem Melaminschwamm mit einer Dicke von 50 mm, einer Dicke von 10 mm, einer thermischen Toleranz von 150° und einer Schallisolierung von 90 % bei einer Frequenz von 2000 Hz.
• eine Basisschicht, die die Wärmeisolierung der erhaltenen Verbundstruktur (11) bereitstellt, wobei hier die Basisschicht eine Glasfaserschicht (8) umfasst, die eine Fläche aus Aluminium aufweist, die eine thermische Toleranz bei + 40 ° / + 180 ° für eine lange Zeit bei + 250 ° C Strahlung bietet,
• einen Nagel (5) aus galvanisiertem Stahlmaterial, der die Geräuschisolationsschicht (6), die Schwammschicht (7) und die Glasfaserschicht (8) zusammenhält und die Befestigung dieser Schichten an der Metallschicht (4) gewährleistet,
• eine Halteklammer (9), die dafür sorgt, dass die Schichten, die die zu erhaltende Verbundstruktur (11) bilden, mittels des Nagels (5) fixiert werden, und
• eine Abdeckung (10) aus PVC, die es ermöglicht, das vorstehende Ende des zur Befestigung verwendeten Nagels (5) zu schließen.

2. Verbundstruktur (11) nach Anspruch 1 **gekennzeichnet durch** das Verschliessen der Randeinschnitten der betreffenden Schichten mittels einer elastischen Silikondichtung, die gegen die Temperaturen zwischen - 60°C und + 200°C beständig ist.

## Revendications

1. Structure composite légère et rigide (11) ayant une résistance élevée à l'admission de carburant et d'huile développée pour un couvercle de chambre de moteur situé dans des zones qui nécessitent une isolation thermique et acoustique et particulièrement située dans des bus, **caractérisée en ce qu'**elle comprend;
• Couche externe (1) en linoléum et utilisée sur la surface externe pour assurer une compatibilité visuelle,
• Couche de matière plastique (2) obtenue à partir de plastique renforcé de verre afin de fournir une base lisse sur laquelle adhérera ledit linoléum (1),
• Couche d'isolation thermique (3) formée d'un matériau en mousse de polystyrène (styrofoam), qui garantit que la structure composite (11) obtenue est légère et tolérante à la chaleur,
• Couche de métal (4) qui est faite d'une tôle d'acier galvanisé ayant une épaisseur de 1 mm, qui assure que la structure composite (11) à obtenir, de sorte qu'elle aide à lier les couches utilisées ensemble, est rigide,
• Couche d'isolation acoustique (6) fournissant une isolation phonique qui est faite de polymère de remplissage minéral ayant une épaisseur de 2 mm,
• Couche éponge (7) faite d'une éponge de mélamine ayant une épaisseur de 10 mm, ayant une tolérance à la chaleur de 150° et une isolation phonique de 90% à une fréquence de 2.000 Hz, dans laquelle ladite couche a une épaisseur de 50 mm,
• Couche principale assurant l'isolation thermique de la structure composite (11) à obtenir, - dans laquelle elle comprend une couche de fibres de verre (8) ayant une surface d'aluminium qui fournit une tolérance à la chaleur à + 250 ° degrés de rayonnement, pendant une longue durée à 40 ° / + 180 °,
• Clou (5) qui maintient ensemble ladite couche d'isolation acoustique (6), ladite couche éponge (7) et ladite couche de fibres de verre (8) et assure sa fixation sur la couche métallique (4) en acier galvanisé,
• Pense de retenue (9) qui assure que les couches formant la structure composite (11) à obtenir sont fixées au moyen dudit clou (5), et
• Capuchon (10) en PVC qui permet d'obturer l'extrémité d'extension du clou (5) utilisé pour la fixation.

2. Structure composite (11) selon la revendication 1, **caractérisée en ce que** les évidements de bord desdites couches sont obturés au moyen d'un joint élastique en silicone qui est tolérant à des températures comprises entre -60 ° C et 200 ° C.
